Europäisches Patentamt

European Patent Office

Office européen des brevets

(11) Publication number: **0 117 953**
**B1**

(12) **EUROPEAN PATENT SPECIFICATION**

(45) Date of publication of patent specification: **11.03.87**

(21) Application number: **83307813.2**

(22) Date of filing: **21.12.83**

(51) Int. Cl.⁴: **H 01 R 4/02, H 01 R 43/02**

(54) **Connection of plug pin to wire conductor.**

(30) Priority: **03.02.83 GB 8302981**

(43) Date of publication of application:
**12.09.84 Bulletin 84/37**

(45) Publication of the grant of the patent:
**11.03.87 Bulletin 87/11**

(84) Designated Contracting States:
**AT BE CH DE FR GB IT LI LU NL SE**

(56) References cited:
**DE-C- 628 084**
**US-A-3 060 259**
**US-A-3 333 083**

(73) Proprietor: **DURAPLUG ELECTRICALS LIMITED**
**Westwood Works Margate Road**
**Broadstairs Kent CP10 2QL (GB)**

(72) Inventor: **Beale, Michael Dand**
**10 Abbey Grove**
**Ramsgate Kent (GB)**

(74) Representative: **Lerwill, John et al**
**A.A. Thornton & Co. Northumberland House**
**303-306 High Holborn**
**London, WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates generally to a method of attaching a wire conductor to a plug pin in the manufacture of electric plugs, especially plugs intended for use with sockets of mains supply circuits.

It is known in the manufacture of electrical plugs to attach the ocnductor wires of a cable permanently to respective plug pins and then to mould a plug body over the pin ends to encapsulate the pin-to-wire connections. Plugs made in this way can be of advantage since when supplied with an appliance there is no danger of the applicable cable being wired to a plug incorrectly. Various methods of attaching the conductor wires to the pins have been proposed. According to one proposal a pin made by slicing from an extrusion is provided with a groove into which the conductor wire is placed and a side of the groove is then deformed by a percussive tool to clamp the conductor wire. For economy it is an advantage if a pin can be made by cutting from an extrusion without requiring any subsequent machining operations to enable a conductor wire to be attached to it. The previously proposed method has a drawback however since the act of cold deforming the pin to grip the conductor can disturb the surfaces of the pin which serve to locate the pin during the moulding of the body.

In DE—C—628084 there is described a method of connecting an insulated conductor to a metal part such as a contact part, by melting the material of the metal part with an electric current to embed the conductor. The conductor is laid into a groove in the metal part having a width which matches the conductor diameter. An electrode is applied to the outer surface of the metal part for melting the metal on each side of the groove. By this method a good low resistance connection is possible. However, the surface of the metal part against which the electrode is pressed may still be disturbed because of molten metal squeezing out between the electrode and the metal part and upsetting the surface.

According to the present invention there is provided a method of connecting a wire conductor to a metal contact part having a groove therein, comprising the steps of laying the conductor in the groove, applying an electrode against the contact part on either side of the groove, passing an electric heating current between the contact part and the electrode to soften the material of the contact part at the sides of the groove and to displace the softened material to embed the conductor in the material of the contact part characterized in that the contact part is a plug pin and is provided with a recess of greater width than the tip of the electrode, the groove is formed along the bottom wall of the recess, and the electrode is applied against the bottom wall of the recess either side of the groove so that the conductor is attached to the pin without disturbing the surface of the pin at either side of the recess.

With this method a good low resistance connection is possible without any risk of disturbing the pin location surfaces.

In one preferred method the groove and recess extend laterally across a surace at the upper end of the pin, which is suitable for pins of rectangular or square cross-section. In an alternative method the groove and recess extend longitudinally the full length of the pin.

A better understanding of the invention will be had from the following detailed description given with reference to the accompanying drawing, in which:

Figure 1 is a front view of a plug pin ready for attachment to a conductor wire;

Figure 2 is a top plan view of the completed connection;

Figure 3 is a section taken along the line III—III in Figure 2;

Figure 4 is a side view of another plug pin ready for connection to a conductor wire;

Figure 5 is an end view of the pin shown in Figure 4;

Figure 6 is a top view of the pin after attachment of the wire; and

Figure 7 is a view similar to Figure 5 showing an alternative shape for the pin.

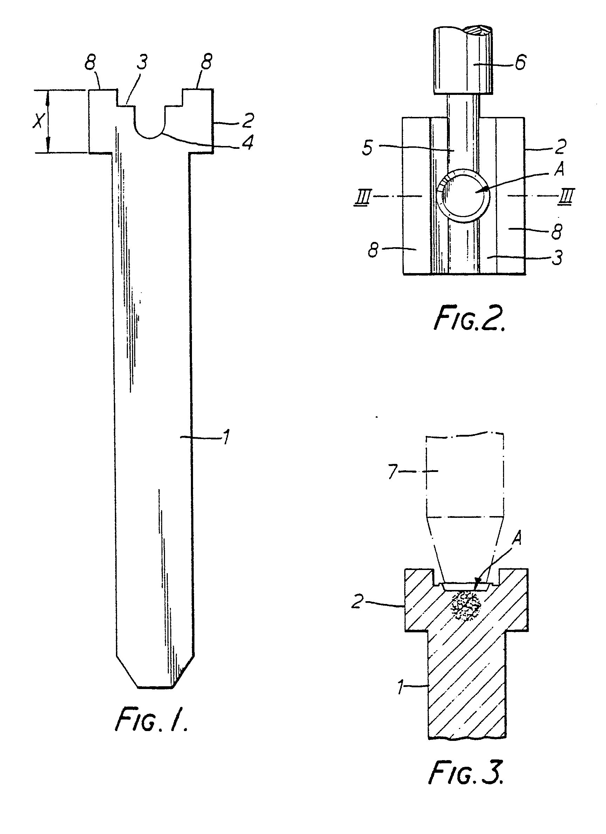

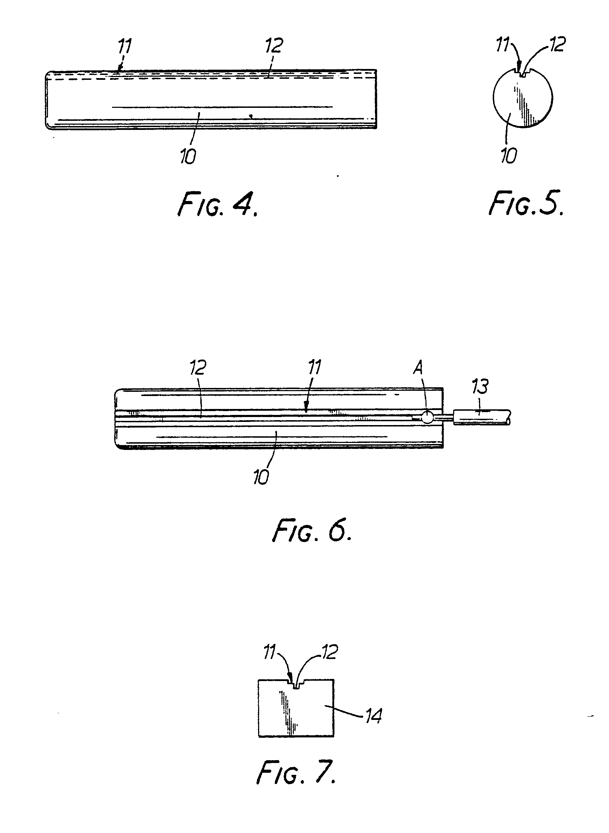

The pin 1 of Figures 1—3 is made by cutting from an extruded rod, the profile of the extrusion being as seen in Figure 1. The pin has lateral chamfers at its forward end and an enlarged head 2 of generally rectangular configuration at the other end. Extending across the top surface of the head 2 is a shallow recess with parallel side walls and a flat bottom wall 3. A U-shaped groove 4 extends along the bottom wall 3 and is of sufficient depth to receive the stranded wire conductor 5 of a cable lead 6.

To connect the lead to the pin, the conductor, stripped of insulation, is laid into the groove 4. An electrode 7 having a diameter greater than the width of groove 4 but less than the width of the recess, is lowered into contact with the bottom wall 3 either side of groove 4 at a central portion A of the pin head. The electrode is connected to a resistance welding machine. The material at the sides of the groove 4 in region A is heated by the electric current flowing between the pin and electrode and is deformed under heat to embed and effectively stake the conductor 5 to the pin 1. A secure and low resistance joint is obtained without any risk of disturbing the location surfaces of the pin.

In a subsequent body moulding step the top surface 8 of the pin head may be acted upon by protuberances on a cover to hold the pin in position, which means that the pin dimensions including the head height X must be maintained to close tolerances. By providing the recess into which the electrode 7 fits it is ensured that the disruption to the top of the pin is confined within this recess so that the upper surface 8 remains undisturbed and undamaged.

In Figures 4 to 6 there is illustrated a plug pin 10 of substantially circular cross-section formed by cutting a length from an extruded rod. Extending along the pin over its full length are a recess 11 and a groove 12, the latter being located at the centre of the flat bottom wall of the recess. Both the recess 11 and the groove 12 are produced during extrusion of the rod from which the pin is cut so the profile of the extruded rod is as seen in Figure 5. The connection of a conductor 13 to the pin is essentially as described above in connection with Figures 1—3. An end portion of the wire, stripped of insulation, is laid into the groove 12 at one end of the pin, which end will be the upper end in the finished plug. An electrode of diameter greater than the width of the groove 12 but less than the width of the recess 11 is moved into contact with the bottom wall of the recess above the conductor wire. The material of the pin heated by the electric current flowing between the pin and electrode is displaced locally under heat in the region A where the electrode is applied, and the wire becomes embedded in the material of the pin and effectively staked to it. The deformation to the pin is confined within the recess 11 and the outer surfaces of the pin are not disturbed.

Although Figures 4 to 6 refer to pins of circular cross-section the same principles are applicable to pins which are square or rectangular in cross-section. For example, Figure 7 shows the end profile of a rectangular pin 14 formed by extrusion with a recess 11 and groove 12 running continuously along one side face. A conductor may be secured to the pin in exactly the same way as described above.

The above described methods of attaching a conductor to a pin according to the invention enables a good electrical connection to be obtained at low cost, the pins can be made economically by extrusion without requiring any machining, and dimensional tolerances are easily maintained.

## Claims

1. A method of connecting a wire conductor (5) to a metal contact part (1; 10) having a groove (4; 12) therein, comprising the steps of laying the conductor in the groove, applying an electrode (7) against the contact part on either side of the groove, and passing an electric heating current between the contact part and the electrode (7) to soften the material of the contact part at the sides of the groove and to displace the softened material to embed the conductor in the material of the contact part, characterized in that the contact part is a plug pin and is provided with a recess (3; 11) of greater width than the tip of the electrode (7), the groove (4; 12) is formed along the bottom wall of the recess, and the electrode is applied against the bottom wall of the recess either side of the groove so that the conductor is attached to the pin without disturbing the surface of the pin at either side of the recess.

2. A method according to claim 1, wherein the groove extends across an end surface of the pin.

3. A method according to claim 1, wherein the groove extends longitudinally of the pin.

### Patentansprüche

1. Verfahren zum Verbinden eines Leitungsdrahtes (5) mit einem Metallkontaktteil (1; 10), das eine Rille (4; 12) darin aufweist, enthaltend die folgenden Schritte: Einlegen des Leiters in die Rille, Anbringen einer Elektrode (7) an dem Kontaktteil zu beiden Seiten der Rille und Hindurchleiten eines elektrischen Heizstroms zwischen dem Kontaktteil und der Elektrode (7), um das Metall des Kontaktteils an den Seiten der Rille zu erweichen und das erweichte Material zu verdrängen, um den Leiter in dem Material des Kontaktteils einzubetten, dadurch gekennzeichnet, daß der Kontaktteil ein Steckerstift ist und mit einer Vertiefung (3; 11) von größerer Breite als die Spitze der Elektrode (7) versehen ist, daß die Rille (4; 12) Längs der Bodenwand der Vertiefung ausgebildet ist, und daß die Elektrode an der Bodenwand der Vertiefung zu beiden Seiten der Rille derart angebracht wird, daß der Leiter an dem Stift befestigt wird, ohne daß die Oberfläche des Stiftes zu beiden Seiten der Vertiefung gestört wird.

2. Verfahren nach Anspruch 1, bei dem die Rille sich quer über eine Stirnseite des Stiftes erstreckt.

3. Verfahren nach Anspruch 1, bei dem die Rille sich in Längsrichtung des Stiftes erstreckt.

### Revendications

1. Procédé de connexion d'un conducteur en forme de fil (5) à une partie de contact métallique (1; 10) comportant une encoche (4; 12), comprenant les opérations qui consistent à placer le conducteur dans l'encoche, à appliquer une électrode (7) contre la partie de contact de part et d'autre de l'encoche et faire passer un courant de chauffage électrique entre la partie de contact et l'électrode (7) afin d'amollir le matériau de la partie de contact de part et d'autre de l'encoche et de déplacer le matériau amolli pour encastrer le conducteur dans le matériau de la partie de contact, caractérisé en ce que la partie de contact est une fiche mâle et est dotée d'un évidement (3, 11) d'une largeur plus grande que celle de la pointe de l'électrode (7), l'encoche (4; 12) est formée le long de la paroi de fond de l'évidement, et l'electrode est appliquée contre la paroi de fond de l'évidement de part et d'autre de l'encoche de sorte que le conducteur se fixe à la fiche sans déformer la surface de la fiche de part et d'autre de l'évidement.

2. Procédé selon la revendication 1, où l'encoche s'étend transversalement à une surface terminale de la fiche.

3. Procédé selon la revendication 1, où l'encoche s'étend longitudinalement à la fiche.

FIG. 1.

FIG. 2.

FIG. 3.

FIG. 4.

FIG. 5.

FIG. 6.

FIG. 7.